# EUROPÄISCHE PATENTSCHRIFT

(11) **EP 0 510 312 B1**
(45) Veröffentlichungstag und Bekanntmachung des Hinweises auf die Patenterteilung: **10.04.1996**
(21) Anmeldenummer: 92102164.8
(22) Anmeldetag: 10.02.1992
(51) Int. Cl.: G01G 23/37

(54) **Vorrichtung zur Erfassung der Gewichtsdaten od.dgl. in Betrieben**
Device for measuring weight data or the like in systems
Dispositif pour la mesure de données de poids ou analogues dans des systèmes

(30) Priorität: 26.04.1991 DE 4113619
(43) Veröffentlichungstag der Anmeldung: 28.10.1992
(73) Patentinhaber: CSB-System Software-Entwicklung & Unternehmensberatung GmbH, D-52511 Geilenkirchen (DE)
(72) Erfinder: Schimitzek, Peter, Dr., W-5130 Geilenkirchen (DE)
(74) Vertreter: Mentzel, Norbert, Dipl.-Phys.

(56) Entgegenhaltungen:
- EP-A- 0 201 301
- DE-A- 3 916 049
- GB-A- 2 167 561
- US-A- 3 940 998

## Beschreibung

Die Erfindung betrifft eine Vorrichtung zum Erfassen des Gewichts von Waren, insbesondere Fleischwaren.

In Betrieben, besonders in der fleischverarbeitenden Industrie, sind in der Regel mehrere Waagen im Einsatz, um die angelieferten Waren bzw. -teile sowie die fertigen Waren bzw. deren Teile zu wiegen. An jeder Waage ist dabei eine Anzeigevorrichtung vorgesehen, die von der Bedienungsperson ablesbar ist. Die Bedienungsperson kann somit die von der Waage ermittelten Gewichtsdaten ablesen und festhalten oder weitergeben. Das Festhalten der ermittelten Gewichtsdaten kann dabei durch Notieren erfolgen. Die Weitergabe der ermittelten Gewichtsdaten kann durch Eintippen in einen Rechner oder in einen Zentralrechner erfolgen. Dem Rechner oder dem Zentralrechner kann dabei auch ein Warenauszeichnungsgerät in Form eines Druckers von Preisetiketten od. dgl. zugeordnet sein. Falls die ermittelten Gewichtsdaten in einen Zentralrechner eingegeben werden, können diese dort auch zu Buchungszwecken od. dgl. gespeichert werden. Die Benutzung dieser Waagen ist jedoch sehr personalaufwendig und weist viele Fehlerquellen auf, zumal nicht sichergestellt ist, daß alle Wägevorgänge erfaßt werden.

Zur zentralen Erfassung mehrerer Wägungen ist in der GB-A-2167561 vorgeschlagen worden, verschiedene Wägestellen unmittelbar mit einem Rechner zu verbinden. In diesem bekannten Meßsystem werden von Dehnungsmeßsensoren an den Wägestellen aufgenommene und dann in Verstärkern verstärkte analoge Signale über einen Multiplexer einem Analog-Digital-Wandler zugeführt und schließlich die digitalisierten Werte grafisch oder zahlenmäßig visualisiert. Diese technische Lösung entspricht in Aufbau und Prinzip einer üblichen elektronischen Waage mit Anschlußmöglichkeiten für mindestens zwei Wiegebrücken.

Nach der EP-A2-201301 ist es auch bekannt, mehrere Waagen unmittelbar mit einem Zentralrechner zu verbinden, um alle Wägevorgänge zu erfassen. Eine solche Anlage bleibt dabei jedoch immer sehr umfangreich und teuer, da alle Waagen ihre Anzeigeeinrichtungen behalten und auch die Eichvorgänge an jeder Waage separat vorgenommen werden müssen.

Der Erfindung liegt die Aufgabe zugrunde, eine Vorrichtung zum Erfassen des Gewichts von Waren, insbesondere Fleischwaren, zu schaffen, bei der in einfacher und wohlfeiler Weise sämtliche Wiegevorgänge und Meßwerte von mehreren einfachen Waagen zuverlässig in einem Personalcoputer erfaßt werden und die oben dargestellten Nachteile vermieden sind.

Diese Aufgabe ist erfindungsgemäß dadurch gelöst, daß in der Vorrichtung zum Erfassen des Gewichts von Waren, insbesondere Fleischwaren, mit mehreren Waagen, die ermittelten Wägedaten in digitaler Form einem zentralen Personalcomputer (PC) zuführbar sind, wobei dieser zusammen mit Einrichtungen zum Aufzeichnen, Überwachen, Protokollieren, Speichern, Bearbeiten und zum Eingeben weiterer Daten der Waren, wie Preisen, in einer zentralen Rack-Station angeordnet ist, und wobei der PC sowohl zum Eichen der einzelnen Waagen als auch zur gemeinsamen und/oder einzelweisen Anzeige der von den einzelnen Waage ermittelten Wägedaten dient.

Die betrieblichen Wägeprozesse werden durch die erfindungsgemäße Vorrichtung wesentlich verbessert und vereinfacht, zumal für die Rack-Station nur noch eine Bedienperson erforderlich ist. Alle Wiegevorgänge werden zuverlässig erfaßt. Die einzelnen Waagen brauchen keine zugehörigen Anzeigevorrichtungen mehr aufweisen, da die ermittelten Gewichtsdaten an der Rack-Station ersichtlich sind. Da die Rack-Station mindestens einen PC (Personal-Computer) aufweist, können die ermittelten Gewichtsdaten zuverlässig überwacht, gespeichert und für die weitere Bearbeitung bereitgehalten werden. Gegebenenfalls können die ermittelten Gewichtsdaten und deren Bearbeitungen auch für eine Steuerung weiterer Arbeitsgänge ausgenutzt werden. Die in digitaler Form mit einem entsprechenden Protokoll beim PC eingehenden Wiegedaten einer jeden Waage sind somit durch das zugehörige Protokoll genau identifiziert, so daß genau ersichtlich ist, von welcher Waage die Wiegedaten kommen, wobei auch Daten und Uhrzeiten angebbar sind. Da die einzelnen Waagen keine eigenen Anzeigeeinrichtungen mehr aufweisen, ist auch eine besonders einfache Eichung möglich, da die Eichung zentral für alle Waagen an dem zentralen PC vorgenommen wird.

An die zentrale Rack-Station können Waagen in Form von Hängebahnwaagen, Bodenwaagen, Bockwaagen, Durchlaufwaagen, Wiegebrücken od.dgl. einschließbar sein. Alle Formen und Arten von Waagen können somit in einfacher Weise an dem PC der Rack-Station angeschlossen werden. Der PC der zentralen Rack-Station kann einen Bildschirm, beispielsweise in Form eines Monitors, zur Anzeige der von den einzelnen Waagen ermittelten Werte aufweisen. Die von den einzelnen Waagen ermittelten Gewichtsdaten können somit in einfacher Weise auf dem Monitor sichtbar gemacht werden.

Der PC der zentralen Rack-Station kann eine Tastatur zum wahlweise einzelnen oder gemeinsamen Aufzeigen der an den einzelnen Waagen ermittelten Werte aufweisen.

Durch entsprechende Betätigung der Tastatur ist somit in einfacher Weise ein einzelnes Aufzeigen der an einer einzelnen Waage ermittelten Werte oder auch das gleichzeitige Aufzeigen von an mehreren Waagen ermittelten Werten möglich.

Dem PC der zentralen Rack-Station kann ein Warenauszeichnungsgerät für die versandfertigen Teile zugeordnet sein. Dadurch können in einfacher Weise die versandfertigen Teile mit einer Warenauszeichnung versehen werden, denen gegebenenfalls das Gewicht und der Preis und die Güteklasse od.dgl. zu entnehmen ist.

Mit der Tastatur können weitere Angaben, wie z.B. Preise od.dgl. in den PC eingebbar und in das Warenauszeichnungsgerät übertragbar sein. Durch Eingeben von entsprechenden Preisen od.dgl. kann somit das Warenauszeichnungsgerät auch mit entsprechenden Preisangaben versehen werden.

Dem PC der zentralen Rack-Station kann ein Speicher zum Festhalten und späteren Abrufen der ermittelten Werte zugeordnet sein. Dadurch können die ermittelten Werte beliebig festgehalten und gegebenenfalls aus Disketten od.dgl. gespeichert werden.

An dem PC der zentralen Rack-Station können außer den Waagen noch weitere Geräte, wie z.B. ein Gerät zur Fleischschichtenbestimmung oder zur Messung der Temperatur des Fleisches anschließbar sein. In einfacher Weise kann somit die zentrale Rack-Station auch noch zum Aufzeigen, Überwachen, Speichern und zur weiteren Bearbeitung von Meßwerten benutzt werden, die von einem Gerät zur Fleischschichtenbestimmung oder einem Gerät zur Messung des Temperatur des Fleisches kommen.

Die an den PC der zentralen Rack-Station angeschlossenen Waagen können vorteilhaft zur Erfassung der Gewichtsdaten od.dgl. von geschlachteten Tieren oder Teilen davon in Fleischwarenbetrieben dienen. Dabei können in einfacher Weise alle Gewichtsdaten, vom Gewicht des zu schlachtenden Tieres angefangen, bis zu Teilen des geschlachteten Tieres erfaßt werden.

Der PC der zentralen Rackstation kann über EDV-Anbindung mit anderen PC-Einrichtungen verbindbar sein. Dadurch besteht in einfacher Weise die Möglichkeit betriebsinterne Vernetzungen vorzunehmen. Außerdem kann eine Vernetzung zu Zweigstellen an jedem beliebigen Ort z.B. über Modem od.dgl. vorgenommen werden, um mit diesem zu kommunizieren.

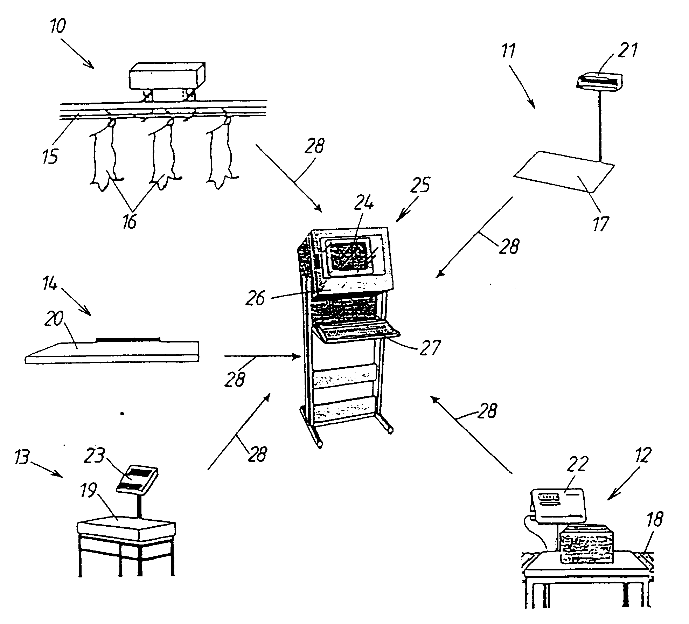

Auf der Zeichnung sind als Ausführungsbeispiel mehrere unterschiedliche Waagen eines Fleischwarenbetriebes dargestellt, die mit dem PC einer zentralen Rack-Station in Verbindung stehen.

Die auf der Zeichnung dargestellten Waagen 1o,11,12,13,14 sind unterschiedlicher Bauart. Die erste Waage ist als Hängebahnwaage 1o ausgebildet, wobei an der Hängebahn 15 Schweinehälften 16 vorgesehen sind, die zu wiegen sind. Die zweite Waage ist als Bodenwaage 11 ausgebildet. Auf der Plattform 17 dieser Bodenwaage 11 sind die zu wiegenden Teile aufzusetzen. Die dritte Waage ist als Durchlaufwaage 12 ausgebildet und in einer Transporteinrichtung 18 angeordnet. Beim Transport auf der Transporteinrichtung durchlaufen die zu wiegenden Teile die Durchlaufwaage 12.

Die vierte Waage ist als Bockwaage 13 ausgebildet. Auf der Plattform 19 dieser Bockwaage sind die zu wiegenden Teile aufzulegen. Die fünfte Waage ist als Wiegebrücke 14 ausgebildet und weist eine Plattform 2o auf, auf der die zu wiegenden Teile anzuordnen sind.

Die Bodenwaage 11 weist eine Anzeigeeinrichtung 21, die Durchlaufwaage 12 eine Anzeigeeinrichtung 22 und die Bockwaage 13 eine Anzeigeeinrichtung 23 auf. Die Anzeigeeinrichtungen 21,22 und 23 können jedoch auch fortgelassen werden, da die mit der Bodenwaage 11, der Durchlaufwaage 12 und der Bockwaage 13 ermittelten Gewichtsdaten genauso wie bei der Wiegebrücke 14 und der Hängebahnwaage 1o an einem gemeinsamen Anzeigegerät aufgezeigt werden können. Das Anzeigegerät ist dabei von einem Bildschirm in Form eines Monitors 24 gebildet. Der Monitor 24 ist dabei Teil einer zentralen Rack-Station 25. Die Rack-Station 25 weist mindestens einen PC (Personal-Computer) 26 und eine Tastatur 27 auf. Die Waagen 1o,11,12,13,14 weisen dabei nicht näher dargestellte Hardware auf, die die Wiegedaten in digitaler Form, mit einem entsprechenden Protokoll versehen, der zentralen Rack-Station 25 zur Verfügung stellen. Die entsprechenden Leitungen zwischen den Waagen 1o bis 14 und der Rack-Station 25 sind dabei auf der Zeichnung schematisch durch die Pfeile 28 dargestellt.

Den fünf Waagen 10 bis 14 eines Fleischwarenbetriebes ist somit in einfacher Weise eine einzige Rack-Station 25 zugeordnet, an der eine einzige Bedienungsperson alle fünf angeschlossenen Waagen 1o bis 14 einschalten, ausschalten, kontrollieren oder überwachen kann. Mit der Tastatur 27 ist dabei auswählbar, ob die ermittelten Gewichtsdaten einer einzigen oder mehreren oder allen Waagen 1o bis 14 auf dem Monitor 24 umgehend sichtbar gemacht werden. Der Rack-Station 25 kann dabei auch noch ein nicht näher dargestellter Speicher und/oder eine nicht näher dargestellte Disketten-Einrichtung zugeordnet werden, um die Gewichtsdaten oder deren Verarbeitungen zu speichern und wieder abrufbar zu machen.

Mit der Tastatur 27 können auch weitere Angaben, wie z.B. Preise od.dgl. in den PC 26 eingegeben werden, mit denen die ermittelten Gewichtsdaten verarbeitet werden. Die ermittelten Gewichtswerte und/oder deren Verarbeitungen können auch zur Steuerung von weiteren Einrichtungen des Fleischwarenbetriebes benutzt werden. So könnte beispielsweise eine gewichtsabhängige Steuerung der Transporteinrichtung 18 und insbesondere von deren nicht näher dargestellten Weichen od.dgl. vorgenommen werden. Der Rack-Station 25 kann auch noch ein nicht näher dargestelltes Warenauszeichnungsgerät zugeordnet werden, welches Beispielsweise die versandfertigen Teile mit einem bedruckten Etikett versieht, auf denen Gewicht, Preis, Güteklasse od.dgl. angegeben ist.

An der zentralen Rack-Station 25 können bedarfsweise neben den Waagen 1o bis 14 auch noch weitere Geräte eines Fleischwarenbetriebes angeschlossen werden. So kann z.B. ein Gerät zur Fleischschichtenbestimmung und/oder auch noch ein Gerät zur Messung der Temperatur des Fleisches angeschlossen werden.

Über EDV-Anbindung kann der PC 26 der zentralen Rackstation 25 mit anderen PC-Einrichtungen verbunden werden. Betriebsinterne Vernetzungen können somit in einfacher Weise durchgeführt werden. Ebenso ist auch eine Vernetzung zu Zweigstellen an jedem beliebigen Ort z.B. über Modem od.dgl. möglich, um mit diesem zu kommunizieren.

Wie bereits erwähnt, ist die dargestellte Ausführung lediglich eine beispielsweise Verwirklichung der Erfindung und diese nicht darauf beschränkt. Vielmehr sind noch mancherlei andere Ausführungen und Abänderungen möglich.

## Patentansprüche

1. Vorrichtung zum Erfassen des Gewichts von Waren, insbesondere Fleischwaren, mit mehreren Waagen (10 bis 14),
wobei die ermittelten Wägedaten in digitaler Form einem zentralen PC (Personalcomputer 26) zuführbar sind,
wobei der PC (26) zusammen mit Einrichtungen zum Aufzeichnen, Überwachen, Protokollieren, Speichern, Bearbeiten und zum Eingeben weiterer Daten der Waren, wie Preisen, in einer zentralen Rack-Station (25) angeordnet ist,
und wobei der PC (26) sowohl zum Eichen der einzelnen Waagen (10 bis 14) als auch zur gemeinsamen und/oder einzelweisen Anzeige der von den einzelnen Waagen (10 bis 14) ermittelten Wägedaten ausgebildet ist.

2. Vorrichtung nach Anspruch 1, dadurch gekennzeichnet, daß Mittel vorgesehen sind, welde so ausgebildet sind, daß sie die im PC (26) anfallenden Daten, wie Gewichtsdaten und Bearbeitungsdaten für eine Steuerung weiterer Arbeitsgänge, wie die einer Transporteinrichtung (18) benutzt werden.

3. Vorrichtung nach Anspruch 2, dadurch gekennzeichnet, daß am gleichen PC (26) Zusatzgeräte zum Erfassen weiterer Meßdaten der auf den Waagen (10 bis 14) behandelten Waren angeschlossen sind.

4. Vorrichtung nach Anspruch 3, dadurch gekennzeichnet, daß das Zusatzgerät ein Gerät zur Fleischschichtenbestimmung ist.

5. Vorrichtung nach Anspruch 3 oder 4, dadurch gekennzeichnet, daß das Zusatzgerät zur Messung der Temperatur von Fleich augebildet ist.

6. Vorrichtung nach einem der Ansprüche 1 bis 5, dadurch gekennzeichnet, daß an dem PC (26) Hängewaagen (10), Bodenwaagen (11), Durchlaufwaagen (13) und/oder Wiegebrücken (14) angeschlossen sind.

7. Vorrichtung nach einem der Ansprüche 1 bis 6, dadurch gekennzeichnet, daß der zentrale PC (26) der zentralen Rack-Station (25) über eine EDV-Anbindung mit anderen PC-Einrichtungen verbindbar ist.

## Claims

1. Apparatus for recording the weight of products, in particular meat products, having a plurality of weighing apparatuses (10 to 14),
wherein the ascertained weighing data can be fed in digital form to a central PC (personal computer 26),
wherein the PC (26) together with devices for recording, monitoring, protocoling, storing, processing and inputting further data in respect of the products such as prices is arranged in a central rack station (25), and
wherein the PC (26) is adapted both for calibration of the individual weighing apparatuses (10 to 14) and also for joint and/or individual display of the weighing data ascertained by the individual weighing apparatuses (10 to 14).

2. Apparatus according to claim 1 characterised in that there are provided means which are such that they use the data occurring in the PC (26), such as weight data and processing data, for a control of further operations such as that of a transport device (18).

3. Apparatus according to claim characterised in that ancillary devices for recording further measurement data in respect of the products dealt with on the weighing apparatuses (10 to 14) are connected to the same PC (26).

4. Apparatus according to claim 3 characterised in that the ancillary device is a device for meat batch determination purposes.

5. Apparatus according to claim 3 or claim 4 characterised in that the ancillary device is adapted for measuring the temperature of meat.

6. Apparatus according to one of claims 1 to 5 characterised in that hanging-type weighing apparatuses (10), floor-type weighing apparatuses (11), continuous motion-type weighing apparatuses (13) and/or weighbridge apparatuses (14) are connected to the PC (26).

7. Apparatus according to one of claims 1 to 6 characterised in that the central PC (26) of the central rack station (25) can be connected to other PC-devices by way of an EDP-link.

## Revendications

1. Dispositif pour la saisie du poids de marchandises, plus particulièrement de marchandises de viandes, avec plusieurs balances (10 à 14), les données de poids déterminées pouvant être amenées sous une forme numérique à un PC (ordinateur personnel 26) central, le PC (26) étant agencé dans une station de baie (25) centrale ensemble avec des dispositifs pour enregistrer, surveiller, imprimer en liste, mémoriser, traiter et pour entrer d'autres données des marchandises, comme des prix, et le PC (26) étant réalisé aussi bien pour l'étalonnage des balances séparées (10 à 14) que pour l'affichage en commun et/ou de façon individuelle des données de poids déterminées par les balances séparées (10 à 14).

2. Dispositif selon la revendication 1, caractérisé en ce que des moyens sont prévus qui sont réalisés de telle manière qu'ils utilisent des données s'accumulant dans le PC (26), comme des données de poids et des données de traitement, pour une commande d'autres opérations, comme celle d'un dispositif de transport (18).

3. Dispositif selon la revendication 2, caractérisé en ce que des appareils supplémentaires pour la saisie d'autres données de mesure des marchandises traitées se trouvant sur les balances (10 à 14), sont connectées au même PC (26).

4. Dispositif selon la revendication 3, caractérisé en ce que l'appareil supplémentaire est un appareil pour la détermination de l'épaisseur de la viande.

5. Dispositif selon l'une quelconque des revendications 3 et 4, caractérisé en ce que l'appareil supplémentaire est réalisé pour la mesure de la température de viande.

6. Dispositif selon l'une quelconque des revendications 1 à 5, caractérisé en ce que des balances à suspension (10), des balances stationnaires (11), des balances de pesage en continu (12), des balances sur socle (13) et/ou des ponts de pesage (14) sont reliés au PC (26).

7. Dispositif selon l'une quelconque des revendications 1 à 6, caractérisé en ce que le PC (26) central de la station de baie (25) centrale peut être relié par l'intermédiaire d'une connexion de traitement de données avec d'autres dispositifs de PC.
